# EUROPÄISCHE PATENTSCHRIFT

(11) **EP 3 027 486 B1**
(45) Veröffentlichungstag und Bekanntmachung des Hinweises auf die Patenterteilung: **27.03.2019**
(21) Anmeldenummer: 14742557.3
(22) Anmeldetag: 25.07.2014
(51) Int. Cl.: B62D 15/02, B60W 10/18, B60W 10/20, B60W 30/06

(54) **ENTSCHEIDEN ÜBER DIE FAHRTRICHTUNG BEIM WIEDERANFAHREN BEI EINEM AUTOMATISIERTEN PARKVORGANG MIT EINEM PARKASSISTENZSYSTEM**
DECIDING OF THE DRIVING DIRECTION DURING RESTARTING AN AUTOMATIC PARKING PROCEDURE
DECISION QUANT A LA DIRECTION DE CONDUITE LORS DU REDEMARRAGE DE L'ASSISTANCE AUTOMATIQUE AU PARCAGE

(30) Priorität: 29.07.2013 DE 102013214805
(43) Veröffentlichungstag der Anmeldung: 08.06.2016
(60) Teilanmeldung: 18211479.3
(73) Patentinhaber: Bayerische Motoren Werke Aktiengesellschaft, 80809 München (DE)
(72) Erfinder: BURTSCHE, Thomas, 83627 Warngau (DE); SCHILLINGER, Rainer, 80803 München (DE); VELTEN, Thomas, 80799 München (DE); GOLDMANN, Thomas, 95445 Bayreuth (DE)
(86) Internationale Anmeldenummer: PCT/EP2014/066104
(87) Internationale Veröffentlichungsnummer: WO 2015/014765

(56) Entgegenhaltungen:
- EP-A2- 0 849 144
- WO-A1-2012/041670
- DE-A1-102007 002 265
- DE-A1-102010 002 105
- DE-A1-102011 086 210
- US-A1- 2011 080 304

## Beschreibung

Die Erfindung betrifft das Wiederanfahren nach unvorhergesehenem Anhalten bei einem automatisierten Parkvorgang mittels eines Parkassistenzsystems mit automatisierter Längs- und Querführung.

Bei Parkassistenzsystemen mit automatisierter Querführung wird die Lenkung des Fahrzeugs während des Einparkvorgangs vom System gesteuert. Die Längsführung muss der Fahrer durch entsprechendes Beschleunigen und Bremsen selbst übernehmen. Bei Parkassistenzsystemen mit automatisierter Quer- und Längsführung wird auch die Aufgabe der Längsführung vom Parkassistenzsystem übernommen; die Längsbewegung des Kraftfahrzeugs wird vom Parkassistenzsystem gesteuert. Bei Parkassistenzsystem mit Quer- und Längsführung wird also die Lenkung, die Bremse und der Fahrzeugantrieb vom Parkassistenzsystem gesteuert. Bei derartigen Parkassistenzsystemen mit automatisierter Quer- und Längsführung hat der Fahrer im Allgemeinen die Möglichkeit, per Betätigung eines Bedienelements im Fahrzeugcockpit das Fahrzeug selbständig einparken und optional ausparken lassen zu können.

Ein beispielhaftes Parkassistenzsystem mit automatisierter Quer- und Längsführung ist in der Druckschrift "Parkassistent mit Längs- und Querführung", Dirk Ahrens, 5. Tagung Fahrerassistenz der TU München, München, 2012 beschrieben, die beispielsweise unter dem Link "http://www.ftm.mw.tum.de/uploads/media/21_Ahrens.pdf" im Internet abrufbar ist. In der manuellen Vorbeifahrt eines Fahrzeugs an parkenden Fahrzeugen wird mittels einer seitlichen Sensorik eine geeignete Längsparklücke gefunden und diese dem Fahrer in einem Display im Fahrzeug optisch angezeigt. Der Fahrer bestätigt dann die gefundene Parklücke. Wenn sich der Fahrer in einem gültigen Startkorridor neben dem vorderen Begrenzungsobjekt befindet, von dem es aus eine mögliche Fahrtrajektorie in eine gültige Parkendposition gibt, erfolgt eine Aktivierung des Parkmanövers durch Drücken und Halten einer Parktaste und anschließendem Lösen der Bremse. Nach Aktivierung des Parkmanövers parkt das Fahrzeug rückwärts mit selbstständiger Steuerung der Lenkung und selbstständiger Steuerung der Längsbewegung in einem oder mehreren Zügen in die Längsparklücke ein.

Zwischen zwei aufeinander folgenden Zügen der Einparktrajektorie liegt jeweils ein sogenannter Umkehrpunkt (auch als Umschaltpunkt bezeichnet), in dem die Fahrtrichtung von rückwärts auf vorwärts oder vorwärts auf rückwärts gewechselt wird. Hierzu kommt das Fahrzeug in dem jeweiligen Umkehrpunkt durch automatische Bremsbetätigung selbstständig in den Stillstand und führt nach Erreichen des Stillstands zum Ändern der Fahrtrichtung einen Gangwechsel im Automatikgetriebe durch.

Die Einparktrajektorie wird nach Vermessung der Parklücke geplant, daraus ergeben sich ein oder mehrere geplante Umkehrpunkte und eine geplante Parkendposition; es ist auch denkbar, dass in einem einzigen Zug die Parkendposition erreicht wird und kein Umkehrpunkt einplant wird. Idealerweise führt das Fahrzeug die Trajektorie wie geplant ab und hält an den geplanten Umschaltpunkten kurz an, um einen Gangwechsel durchzuführen.

Das Fahrzeug kann aber auch unvorhergesehen beim Abfahren der Einparktrajektorie zum Stehen kommen, beispielsweise bei Abbruch durch den Fahrer oder bei einem erhöhten Fahrwiderstand.

Aus der Druckschrift US 2011/0080304 A1 ist ein Parkassistenzsystem bekannt, welches während des Einparkens die Lenkung des Fahrzeugs übernimmt. Sofern der Fahrer selbst oder eine andere Ursache eine Deaktivierung des Parksystems hervorruft, werden die Position des Fahrzeugs und die Trajektorie abgespeichert. Der Fahrer wird dann aufgefordert, das Parkmanöver wieder aufzunehmen. Wenn der Fahrer einen entsprechenden Befehl zur Wiederaufnahme gibt, wird das Parkmanöver weitergeführt.

Die Druckschrift DE 10 2010 002 105 A1 beschreibt ein Verfahren zur Unterstützung eines Fahrers eines Fahrzeugs bei einem Fahrmanöver, bei dem zumindest die Umgebung des Fahrzeugs in Fahrtrichtung vordem Fahrzeug erfasst wird, um Objekte zu erfassen. Bei einer drohenden Kollision mit einem Objekt erfolgen ein automatischer Lenkeingriff und/oder ein automatischer Bremseingriff, um eine Kollision mit dem Objekt zu vermeiden. Die Unterstützung des Fahrers wird abgebrochen, wenn der Fahrer ein Lenkmoment entgegen dem vorgegebenen Lenkeinschlag aufbringt. Eine erneute Unterstützung des Fahrers erfolgt, wenn nach Abbruch der Unterstützung eine alternative Trajektorie zum Umfahren des Objekts erreicht wird.

Die Druckschrift DE 10 2011 086 210 A1 beschreibt ein Verfahren zur Unterstützung eines Fahrers eines Kraftfahrzeugs bei einem Fahrmanöver, bei dem das Fahrzeug angehalten wird, wenn ein Objekt im Fahrschlauch erfasst wird. Das Fahrmanöver wird fortgesetzt, sobald das Objekt den Fahrschlauch verlassen hat. Wenn statt im Fahrschlauch ein Objekt außerhalb des Fahrschlauchs detektiert wird, wird das Fahrzeug abgebremst und das Fahrmanöver langsam fortgesetzt.

Die Druckschrift WO 2012/041670 A1 beschreibt ein Verfahren zur Unterstützung eines Einparkvorgangs. Wenn im Bereich der Parklücke unerwartet ein Hindernis auftaucht, welches bei der Vermessung der Parklücke nicht vom seitlichen Sensor erkannt wurde, wird die absolute Position des Hindernisses ermittelt. In Abhängigkeit der Position des Hindernisses wird ein Befehl zum Abbruch des Einparkvorgangs gegeben.

Die Druckschrift EP 0 849 144 A2 beschreibt ein Parkassistenzsystem, bei welchem der Parkprozess im Fall eines Hindernisses unterbrochen wird. Es wird dann eine Prüfung durchgeführt, ob eine Fortführung des Parkprozesses möglich ist. Wenn dies nicht der Fall ist, wird das Fahrzeug in die Startposition zurückversetzt. Danach wird die Position des Fahrzeugs korrigiert, um das Parkmanöver erneut zu starten.

Aus der DE 10 2007 002 265 A1 ist ein Verfahren zum Steuern eines Kraftfahrzeugs von einer ersten Position zu einer zweiten Position unter manueller Betätigung der Lenkung beschrieben. Es wird die Änderungsgeschwindigkeit der betragsmäßigen Differenz des Ist-Lenkwinkels vom Soll-Lenkwinkel bestimmt, wobei die Längsgeschwindigkeit in Abhängigkeit von der Änderungsgeschwindigkeit gesteuert wird. Das Kraftfahrzeug kann in den Stillstand abgebremst werden, sobald sich ergibt, dass eine realisierbare Trajektorie zwischen der Ist-Position des Kraftfahrzeugs und der gewünschten zweiten Position nur durch Einstellen eines größtmöglichen Lenkeinschlages noch erreichbar ist. Es wird dann abgewartet, bis der Fahrer den maximalen Lenkeinschlag eingestellt hat und erst dann kann das Fahrzeug auf der Trajektorie wieder in Gang gesetzt werden. Der nächstliegende Stand der Technik ist in der DE 10 2007 002 265 A1 zu sehen.

Es ist Aufgabe der Erfindung, das Wiederanfahren des Fahrzeugs nach einem vorstehend beschriebenen unvorhergesehenen Stillstand zu verbessern.

Die Aufgabe wird durch die Merkmale der unabhängigen Patentansprüche gelöst. Vorteilhafte Ausführungsformen sind in den abhängigen Ansprüchen beschrieben.

Ein erster Aspekt der Erfindung betrifft ein Verfahren zum Wiederanfahren eines Kraftfahrzeugs nach unvorhergesehenem Anhalten bei einem automatisierten Parkvorgang, insbesondere bei einem rückwärtigen Einparkvorgang in eine Längsparklücke (parallel zur Straßenrichtung), mittels eines Parkassistenzsystems mit automatisierter Längs- und Querführung.

Gemäß dem Verfahren wird im Fall des Anhaltens des Fahrzeugs über ein Wiederanfahren des Fahrzeugs in der bisherigen, vor Anhalten des Fahrzeugs vorherrschenden Fahrtrichtung entschieden. Die Entscheidung erfolgt gemäß einer bevorzugten Ausgestaltung der Erfindung in Abhängigkeit der Länge des verbleibenden Fahrwegs von der aktuellen Position bis zum nächsten in der bisherigen Fahrtrichtung liegenden geplanten Anhaltepunkt der Trajektorie. Bei einem Anhaltepunkt der Trajektorie handelt es sich um einen Umkehrpunkt (erste Ausführungsform des Verfahrens) oder um die Parkendposition (zweite Ausführungsform des Verfahrens). Bei positiver Entscheidung erfolgt ein Wiederanfahren des Fahrzeugs in der bisherigen Fahrtrichtung. Bei negativer Entscheidung erfolgt mit einem Umkehrpunkt als nächsten in der bisherigen Fahrtrichtung liegenden Anhaltepunkt (erste Ausführungsform) ein Wiederanfahren des Fahrzeugs entgegen der bisherigen Fahrtrichtung. Bei der zweiten Ausführungsform des Verfahrens mit der Parkendposition als nächsten in der bisherigen Fahrtrichtung liegenden Anhaltepunkt und keinem Umkehrpunkt zwischen der aktuellen Position und der Parkendposition erfolgt im Fall einer negativen Entscheidung kein Wiederanfahren des Fahrzeugs und der Parkvorgang wird beendet.

Durch das erfindungsgemäße Verfahren kann verhindert werden, dass, wenn das Fahrzeug kurz vor einem geplanten Anhaltepunkt unvorhergesehen zum Stehen kommt, dann das Parkassistenzsystem das Fahrzeug für eine kurze Strecke anfährt, um dann im Fall eines Umkehrpunkts als Anhaltepunkt den Fahrtrichtungswechsel einzuleiten oder im Fall der Parkendposition als Anhaltepunkt die Endposition als erreicht auszugeben. Somit können aus Sicht des Fahrers nicht plausible Situationen mit kurzem Anfahren nach einem unvorhergesehenen Stillstand vermieden werden.

Zusätzlich kann auch in Abhängigkeit des Vorliegens eines etwaigen Hindernisses in der bisherigen Fahrtrichtung über ein Wiederanfahren des Fahrzeugs in der bisherigen Fahrtrichtung entschieden werden. Wenn beispielsweise die bisherige Fahrtrichtung durch ein Hindernis versperrt wird, dann führt das System selbstständig einen Fahrtrichtungswechsel durch und führt das Parkmanöver in der entgegengesetzten Fahrtrichtung fort.

Bei der ersten Ausführungsform wird die Entscheidung in Abhängigkeit der Länge des verbleibenden Fahrwegs von der aktuellen Position bis zum nächsten in der bisherigen Fahrtrichtung liegenden geplanten Umkehrpunkt der Trajektorie getroffen, wobei bei negativer Entscheidung das Fahrzeug entgegen der bisherigen Fahrtrichtung angefahren wird.

Bei der zweiten Ausführungsform wird im Fall des Anhaltens vor der Parkendposition die Entscheidung in Abhängigkeit der Länge des verbleibenden Fahrwegs von der aktuellen Position bis zur Parkendposition der Trajektorie getroffen (sofern auf der Trajektorie kein geplanter Umkehrpunkt zwischen der aktuellen Position und der Parkendposition liegt). Bei negativer Entscheidung wird das Fahrzeug nicht wiederangefahren und das Fahrzeug beendet den Parkvorgang.

Vorzugsweise wird zum Entscheiden über ein Wiederanfahren des Fahrzeugs in der bisherigen Fahrtrichtung ein Schwellwertvergleich des verbleibende Fahrweg von der aktuellen Position bis zum nächsten in der bisherigen Fahrtrichtung liegenden geplanten Anhaltepunkt der Trajektorie mit einem Schwellwert größer Null (beispielsweise 10 cm) durchgeführt.

Im Rahmen des Schwellwertvergleichs wird vorzugsweise geprüft, ob der verbleibende Fahrweg von der aktuellen Position bis zum nächsten in der bisherigen Fahrtrichtung liegenden geplanten Anhaltepunkt der Trajektorie kleiner oder kleiner gleich dem Schwellwert ist.

Für den Fall, dass der verbleibende Fahrweg kleiner bzw. kleiner gleich dem Schwellwert ist, fährt das Fahrzeug vorzugsweise entgegen der bisherigen Fahrtrichtung an (wenn das Fahrzeug kurz vor einem Umkehrpunkt anhält) oder das Fahrzeug fährt nicht wieder an und der Parkvorgang wird beendet (wenn das Fahrzeug kurz vor der Parkendposition anhält).

Der Schwellwert liegt vorzugsweise im Bereich von 30 cm bis 5 cm. Beispielsweise entspricht der Schwellwert ungefähr dem Wert 10 cm.

Ein zweiter Aspekt der Erfindung betrifft ein Parkassistenzsystem mit automatisierter Längs- und Querführung. Das Parkassistenzsystem ist eingerichtet, bei unvorhergesehenem Anhalten während eines automatisierten Parkvorgangs über ein Wiederanfahren des Fahrzeugs in der bisherigen, vor Anhalten des Fahrzeugs vorherrschenden Fahrtrichtung zu entscheiden. Die Entscheidung erfolgt vorzugsweise in Abhängigkeit der Länge des verbleibenden Fahrwegs von der aktuellen Position bis zum nächsten in der bisherigen Fahrtrichtung liegenden geplanten Anhaltepunkt der Trajektorie. Bei einem Anhaltepunkt der Trajektorie handelt es sich um einen Umkehrpunkt (erste Ausführungsform des Parkassistenzsystems) oder um die Parkendposition (zweite Ausführungsform des Parkassistenzsystems). Die Entscheidung kann zusätzlich in Abhängigkeit des Vorliegens eines etwaigen Hindernisses in der bisherigen Fahrtrichtung getroffen werden.

Bei positiver Entscheidung wird seitens des Systems ein Wiederanfahren des Fahrzeugs in der bisherigen Fahrtrichtung veranlasst. Bei negativer Entscheidung wird bei der ersten Ausführungsform des Parkassistenzsystems mit einem Umkehrpunkt als nächsten in der bisherigen Fahrtrichtung liegenden Anhaltepunkt ein Wiederanfahren des Fahrzeugs entgegen der bisherigen Fahrtrichtung veranlasst oder es wird bei der zweiten Ausführungsform des Parkassistenzsystems mit der Parkendposition als nächsten in der bisherigen Fahrtrichtung liegenden Anhaltepunkt und keinem geplanten Umkehrpunkt zwischen der aktuellen Position und der Parkendposition kein Wiederanfahren veranlasst (in keiner der beiden Fahrtrichtungen) und der Parkvorgang wird beendet.

Die vorstehenden Ausführungen zum erfindungsgemäßen Verfahren nach dem ersten Aspekt der Erfindung gelten in entsprechender Weise auch für das erfindungsgemäße Parkassistenzsystem nach dem zweiten Aspekt der Erfindung. An dieser Stelle nicht explizit beschriebene vorteilhafte Ausführungsbeispiele des erfindungsgemäßen Systems entsprechen den beschriebenen vorteilhaften Ausführungsbeispielen des erfindungsgemäßen Verfahrens.

Die Erfindung wird nachfolgend unter Zuhilfenahme auf die beigefügte Zeichnung anhand eines Ausführungsbeispiels beschrieben.

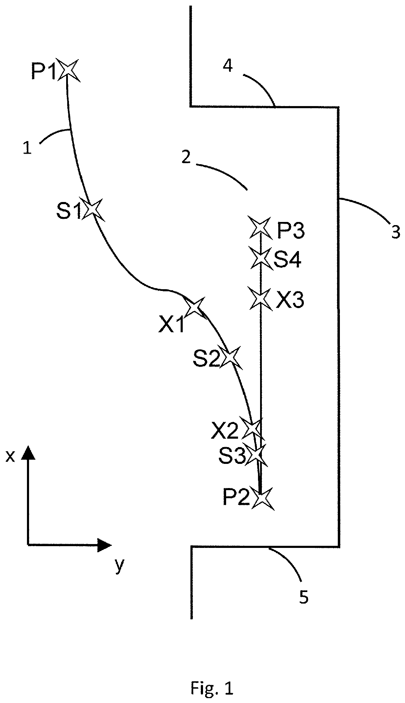

Fig. 1 zeigt einen schematischen Verlauf einer beispielhaften Einparktrajektorie 1 für ein rückwärtiges Einparkmanöver in eine Längsparklücke 2 in der Draufsicht. Die Längsparklücke 2 wird in y-Richtung durch eine seitliche Begrenzungslinie 3 begrenzt, beispielsweise durch einen Bordstein. In x-Richtung wird die Längsparklücke 2 durch eine vordere Begrenzungslinie 4 und durch eine hintere Begrenzungslinie 5 begrenzt. Die vordere Begrenzungslinie 4 markiert beispielsweise das Heck eines vorderen Fahrzeugs und die hintere Begrenzungslinie 5 markiert beispielsweise die Front eines hinteren Fahrzeugs.

Im Fall von Fig. 1 ist der Bezugspunkt des Fahrzeugs für die Einparktrajektorie beispielsweise die Mitte der Hinterachse des Fahrzeugs. Das Einparkmanöver umfasst beispielsweise zwei Züge: einen ersten Einparkzug in Rückwärtsrichtung vom Anfangspunkt P1 der Einparktrajektorie 1 bis zum Umkehrpunkt P2 und einen zweiten Einparkzug in Vorwärtsrichtung vom Umkehrpunkt P2 bis zur Parkendposition P3.

Nach der Vermessung der Längsparklücke 2 wird die Einparktrajektorie 1 geplant; daraus ergeben sich ein oder mehrere geplante Umkehrpunkte P2 und eine geplante Parkendposition P3. Idealerweise fährt das Fahrzeug die Einparktrajektorie wie geplant ab und hält an den geplanten Umkehrpunkten P2 an. Wenn das Fahrzeug kurz vor einem geplanten Umkehrpunkt unvorhergesehen zum Stehen kommt (z.B. aufgrund eines Abbruchs durch den Fahrer oder durch einen hohen Fahrwiderstand), dann soll ein kurzes Anfahren für eine kurze Strecke in der bisherigen Fahrtrichtung vermieden werden.

Hierzu wird die Einparktrajektorie 1 in drei Bereiche unterteilt:
1. Bereich der Annäherung an die Parklücke 2 und des Einschwenkens in die Parklücke 2 innerhalb des ersten Einparkzugs (Bereich ab dem Anfangspunkt P1 bis zum Punkt X1, ohne den Punkt X1 selbst):
   Wenn in diesem 1. Bereich eine Unterbrechung des Parkvorganges stattfindet (beispielsweise ein Fahrzeug-Stopp an der Position S1), dann wird das Einparkmanöver nach dem Wiederanfahren in der bisherigen Fahrtrichtung fortgesetzt. Sollte dies nicht möglich sein, z.B. weil aufgrund der Ultraschallsensorik ein Hindernis im Fahrschlauch der bisherigen Fahrtrichtung erkannt wird, wird der Parkvorgang abgebrochen.
2. Bereich innerhalb Parklücke 2, in der ein vorgezogener Richtungswechsel das Erreichen einer zwar neu zu planenden aber akzeptablen Parkendposition ermöglicht (Bereich ab dem Punkt X1):
   Wenn in diesem 2. Bereich und außerhalb der Teilbereiche unter 3. eine Unterbrechung des Parkvorgangs mit Anhalten des Fahrzeugs stattfindet, dann wird das Parkmanöver nach Möglichkeit in der bisherigen Fahrtrichtung fortgesetzt.
   Wenn in diesem 2. Bereich eine Unterbrechung des Parkvorganges stattfindet (beispielsweise an der Position S2) und die bisherige Fahrtrichtung durch ein mittels der Ultraschallsensorik erkanntes Hindernis im Fahrschlauch versperrt wird, dann führt das System selbsttätig einen Fahrtrichtungswechsel durch und setzt das Parkmanöver in der entgegengesetzten Fahrtrichtung fort.
   Der Punkt X1 auf der Einparktrajektorie 2 des ersten Einparkzugs entspricht vorzugsweise dem Punkt, ab dem bei einem Wiederanfahren entgegen der bisherigen Fahrtrichtung eine akzeptable Parkendposition erreicht werden kann. Der Punkt X1 ist beispielsweise so definiert, dass dieser dem frühesten Punkt auf der Einparktrajektorie entspricht, ab dem sich das gesamte Fahrzeug in x-Richtung auf Höhe der Parklücke 2 befindet und gleichzeitig der Abstand zum Bordstein 3 eine bestimmte Schwellwert (beispielsweise 50 cm) nicht überschreitet. Das gesamte Fahrzeug befindet sich in x-Richtung auf Höhe der Parklücke 2, wenn sich das Fahrzeug in x-Richtung unterhalb der vorderen Begrenzungslinie 4 und oberhalb der hinteren Begrenzungslinie 5 befindet. Die rechte vordere Ecke des Fahrzeugs befindet sich dann beispielsweise unterhalb der vorderen Begrenzungslinie 4.
   Ab diesem Punkt X1 kann trotz eines vorgezogenen Richtungswechsels eine akzeptable Parkendposition erreicht werden. Diese kennzeichnet sich beispielsweise dadurch, dass in der Parkendposition der Winkel zwischen der Längsrichtung des Fahrzeugs und der seitlichen Begrenzungslinie 3 kleiner als ein bestimmter Schwellwert (z. B. 1°) ist und der Abstand zu der seitlichen Begrenzungslinie 3 in einem bestimmten Bereich liegt (z. B. größer 0 cm und kleiner 40 cm).
   Ab dem Punkt X1 sind also ein vorgezogener Richtungswechsel grundsätzlich möglich.
3. Teilbereiche innerhalb des 2. Bereichs kurz vor dem geplanten Umkehrpunkt P2 (Bereich zwischen dem Punkt X2 und dem Umkehrpunkt P2) bzw. kurz vor der geplanten Parkendposition P3 (Bereich zwischen X3 und P3):
   Wenn in diesen Teilbereichen des 2. Bereichs eine unvorhergesehene Unterbrechung des Parkvorganges stattfindet und das Fahrzeug anhält (z. B. an den Punkten S3 oder S4), dann wird das Manöver in der entgegengesetzten Fahrtrichtung fortgesetzt (beispielsweise im Fall des Anhaltens an Punkt S3 kurz vor dem Umkehrpunkt P2) bzw. vorzeitig die Endposition erreicht (beispielsweise im Fall des Anhaltens an Punkt S4 kurz vor der geplanten Parkendposition P3). Der Grund hierfür ist, dass andernfalls bei einem Anfahren in der bisherigen Fahrtrichtung nach kurzer Strecke (beispielsweise wenigen cm) wieder angehalten werden müsste; dies ist für den Fahrer nicht plausibel. Die Teilbereiche beginnen beispielsweise ab einem Restfahrweg von 10 cm bis zu dem geplanten Umkehrpunkt P2 bzw. bis zu der geplanten Parkendposition P3. Die beiden Punkte X2 und X3 liegen also jeweils eine feste Wegstrecke vor dem geplanten Punkt P2 bzw. P3 (z. B. 10 cm vorher).

Vorstehend wurde ein Verfahren beschrieben, bei dem für den Fall, dass das Fahrzeug während des Einparkmanövers zum Stehen kommt, vor der Weiterfahrt anhand des verbleibenden geplanten Weges zum nächsten Anhaltepunkt und/oder dem Vorliegen eines Hindernisses in der ursprünglichen Richtung entschieden wird, ob eine Weiterfahrt in der ursprünglich geplanten Richtung sinnvoll ist. Falls diese Prüfung positiv verläuft, dann wird in der vorherigen Richtung angefahren, andernfalls wird vor dem Anfahren ein Fahrtrichtungswechsel eingeleitet, sofern dies zum Erreichen einer akzeptablen Endposition möglich ist.

## Patentansprüche

1. Verfahren zum Wiederanfahren eines Kraftfahrzeugs nach unvorhergesehenem Anhalten bei einem automatisierten Parkvorgang mittels eines Parkassistenzsystems mit automatisierter Längs- und Querführung, welches die Schritte umfasst:
- im Fall des Anhaltens des Fahrzeugs, Entscheiden über ein Wiederanfahren des Fahrzeugs in der bisherigen, vor Anhalten des Fahrzeugs vorherrschenden Fahrtrichtung in Abhängigkeit der Länge des verbleibenden Fahrwegs von der aktuellen Position (S3, S4) bis zum nächsten in der bisherigen Fahrtrichtung liegenden geplanten Anhaltepunkt (P2, P3) der Trajektorie (1), wobei der nächste in der bisherigen Fahrtrichtung liegende Anhaltepunkt der Trajektorie
- in einer ersten Ausführungsform des Verfahrens ein Umkehrpunkt (P2) der Trajektorie (1) oder
- in einer alternativen, zweiten Ausführungsform des Verfahrens eine Parkendposition (P3) der Trajektorie (1) ist,
- im Fall einer positiven Entscheidung, Wiederanfahren des Fahrzeugs in der bisherigen Fahrtrichtung und
- im Fall einer negativen Entscheidung,
- bei der ersten Ausführungsform des Verfahrens mit einem Umkehrpunkt (P2) als nächsten in der bisherigen Fahrtrichtung liegenden Anhaltepunkt, Wiederanfahren des Fahrzeugs entgegen der bisherigen Fahrtrichtung, oder
- bei der zweiten Ausführungsform des Verfahrens mit der Parkendposition (P3) als nächsten in der bisherigen Fahrtrichtung liegenden Anhaltepunkt und keinem geplanten Umkehrpunkt zwischen der aktuellen Position (S4) und der Parkendposition (P3), kein Wiederanfahren des Fahrzeugs und Beenden des Parkvorgangs.

2. Verfahren nach einem der vorhergehenden Ansprüche, wobei zum Entscheiden über ein Wiederanfahren des Fahrzeugs in der bisherigen, vor Anhalten des Fahrzeugs vorherrschenden Fahrtrichtung ein Schwellwertvergleich der Länge des verbleibenden Fahrwegs von der aktuellen Position (S3, S4) bis zum nächsten in der bisherigen Fahrtrichtung liegenden geplanten Anhaltepunkt (P2, P3) der Trajektorie (1) mit einem Schwellwert größer null durchgeführt wird.

3. Verfahren nach Anspruch 2, wobei im Rahmen des Schwellwertvergleich geprüft wird, ob die Länge des verbleibenden Fahrwegs von der aktuellen Position (S3, S4) bis zum nächsten in der bisherigen Fahrtrichtung liegenden geplanten Anhaltepunkt (P2, P3) der Trajektorie (1) kleiner oder kleiner gleich dem Schwellwert ist.

4. Verfahren nach Anspruch 3, wobei
für den Fall, dass die Länge des verbleibenden Fahrwegs kleiner bzw. kleiner gleich dem Schwellwert ist, das Fahrzeug entgegen der bisherigen Fahrtrichtung anfährt oder das Fahrzeug nicht wiederanfährt und der Parkvorgang beendet wird.

5. Verfahren nach einem der Ansprüche 2 bis 4, wobei der Schwellwert ein Wert im Bereich von 30 cm bis 5 cm ist, insbesondere der Schwellwert ungefähr dem Wert 10 cm entspricht.

6. Verfahren nach einem der vorhergehenden Ansprüche, wobei es sich bei dem Parkvorgang um einen Einparkvorgang handelt.

7. Parkassistenzsystem mit automatisierter Längs- und Querführung für ein Kraftfahrzeug, wobei das Parkassistenzsystem eingerichtet ist,
- bei unvorhergesehenem Anhalten während eines automatisierten Parkvorgangs über ein Wiederanfahren des Fahrzeugs in der bisherigen, vor Anhalten des Fahrzeugs vorherrschenden Fahrtrichtung in Abhängigkeit der Länge des verbleibenden Fahrwegs von der aktuellen Position (S3, S4) bis zum nächsten in der bisherigen Fahrtrichtung liegenden geplanten Anhaltepunkt (P2, P3) der Trajektorie zu entscheiden, wobei der nächste in der bisherigen Fahrtrichtung liegende Anhaltepunkt der Trajektorie
- in einer ersten Ausführungsform des Parkassistenzsystems ein Umkehrpunkt (P2) der Trajektorie (1) oder
- in einer alternativen, zweiten Ausführungsform des Parkassistenzsystems eine Parkendposition (P3) der Trajektorie (1) ist,
- im Fall einer positiven Entscheidung ein Wiederanfahren des Fahrzeugs in der bisherigen Fahrtrichtung zu veranlassen und
- im Fall einer negativen Entscheidung,
- bei der ersten Ausführungsform des Parkassistenzsystems mit einem Umkehrpunkt (P2) als nächsten in der bisherigen Fahrtrichtung liegenden Anhaltepunkt, ein Wiederanfahren des Fahrzeugs entgegen der bisherigen Fahrtrichtung zu verlassen oder
- bei der zweiten Ausführungsform des Parkassistenzsystems mit der Parkendposition (P3) als nächsten in der bisherigen Fahrtrichtung liegenden Anhaltepunkt und keinem geplanten Umkehrpunkt (P2) zwischen der aktuellen Position (S4) und der Parkendposition (P3), kein Wiederanfahren des Fahrzeugs zu veranlassen und den Parkvorgang zu beenden.

8. Kraftfahrzeug umfassend ein Parkassistenzsystem nach Anspruch 7.

## Claims

1. A method for resuming movement of a motor vehicle after unforeseen stopping in an automated parking operation carried out by a parking assistance system having automated longitudinal and transverse guidance, the method comprising the following steps:
- in the event of a stopping of the vehicle, deciding whether to resume movement of the vehicle in the previous direction of travel which existed before the vehicle was stopped depending on the length of the remaining route from the current position (S3, S4) up to the next planned stopping point (P2, P3), in the previous direction of travel, on the trajectory (1), wherein the next stopping point, in the previous direction of travel, on the trajectory
- in a first embodiment of the method is a reversal point (P2) of the trajectory (1), or
- in an alternative, second embodiment of the method is a final parked position (P3) of the trajectory (1),
- in the event of a positive decision, resuming the movement of the vehicle in the previous direction of travel, and
- in the event of a negative decision:
- in the first embodiment of the method with a reversal point (P2) as next stopping point in the previous direction of travel, resuming the movement of the vehicle counter to the previous direction of travel, or
- in the second embodiment of the method with the final parked position (P3) as next stopping point in the previous direction of travel and no planned reversal point between the current position (S4) and the final parked position (P3), not resuming the movement of the vehicle and ending the parking operation.

2. A method according to the preceding claim, wherein, in order to decide whether to resume movement of the vehicle in the previous direction of travel which existed before the vehicle was stopped, a threshold value comparison of the length of the remaining route from the current position (S3, S4) up to the next planned stopping point (P2, P3), in the previous direction of travel, on the trajectory (1) is made with a threshold value which is greater than zero.

3. A method according to claim 2, wherein within the scope of the threshold value comparison it is checked whether the length of the remaining route from the current position (S3, S4) up to the next planned stopping point (P2, P3), in the previous direction of travel, on the trajectory (1) is less than or less than or equal to the threshold value.

4. A method according to claim 3, wherein in the event of the length of the remaining route being less than or less than or equal to the threshold value, the movement of the vehicle counter to the previous direction of travel is started, or the movement of the vehicle is not resumed and the parking operation is ended.

5. A method according to any one of claims 2 to 4, wherein the threshold value is a value in the range of from 30 cm to 5 cm, more especially the threshold value corresponding approximately to the value of 10 cm.

6. A method according to any one of the preceding claims, wherein the parking operation is an operation of reversing into a parking space.

7. A parking assistance system with automated longitudinal and transverse guidance for a motor vehicle, wherein the parking assistance system is designed
- in the event of unforeseen stopping during an automated parking operation, to decide whether to resume movement of the vehicle in the previous direction of travel which existed before the vehicle was stopped depending on the length of the remaining route from the current position (S3, S4) up to the next planned stopping point (P2, P3), in the previous direction of travel, on the trajectory, wherein the next stopping point, in the previous direction of travel, on the trajectory
- in a first embodiment of the parking assistance system is a reversal point (P2) of the trajectory (1), or
- in an alternative, second embodiment of the parking assistance system is a final parked position (P3) of the trajectory (1),
- in the event of a positive decision, resuming the movement of the vehicle in the previous direction of travel, and
- in the event of a negative decision:
- in the first embodiment of the parking assistance system with a reversal point (P2) as next stopping point in the previous direction of travel, resuming the movement of the vehicle counter to the previous direction of travel, or
- in the second embodiment of the parking assistance system with the final parked position (P3) as next stopping point in the previous direction of travel and no planned reversal point (P2) between the current position (S4) and the final parked position (P3), not resuming the movement of the vehicle and ending the parking operation.

8. A motor vehicle comprising a parking assistance system according to claim 7.

## Revendications

1. Procédé permettant de faire redémarrer un véhicule après un arrêt imprévu lors d'un processus de stationnement automatisé à l'aide d'un système d'assistance au stationnement comportant un système de guidage longitudinal et un système de guidage transversal automatisés, ce procédé comprenant des étapes consistant à :
- en cas d'arrêt du véhicule, décider de le redémarrer dans la direction de déplacement précédente présente lors de l'arrêt, en fonction de la longueur du trajet restant entre la position actuelle prévu (S3, S4) et le prochain point d'arrêt prévu (P2, P3) de la trajectoire (1) situé dans la direction de déplacement précédente, le point d'arrêt suivant de la trajectoire situé dans la direction de déplacement précédente étant :
- selon un premier mode de réalisation du procédé un point d'inversion (P2) de la trajectoire (1) ou,
- en variante selon un second mode de réalisation du procédé la position de fin de stationnement (P3) de la trajectoire (1),
- dans le cas d'une décision positive, redémarrer le véhicule dans la direction de déplacement précédente, et
- dans le cas d'une décision négative :
- selon le premier mode de réalisation du procédé comprenant un point d'inversion (P2) en tant que prochain point d'arrêt situé dans la direction de déplacement précédente, redémarrer le véhicule dans la direction opposée à la direction de déplacement précédente, ou
- selon le second mode de réalisation du procédé comprenant la position de fin stationnement (P3) en tant que prochain point d'arrêt situé dans la direction de déplacement précédente et aucun point d'inversion prévu entre la position actuelle (S4) et la position de fin de stationnement (P3), ne pas redémarrer le véhicule et terminer le processus de stationnement.

2. Procédé conforme à la revendication 2,
selon lequel,
pour décider de redémarrer le véhicule dans la direction de déplacement précédente, présente avant son arrêt, on effectue une comparaison de valeur de seuil de la longueur du trajet restant entre la position actuelle (S3, S4) et le point d'arrêt suivant prévu (P2, P3) de la trajectoire (1) situé dans la direction de déplacement précédente avec une valeur de seuil supérieure à 0.

3. Procédé conforme à la revendication 2,
selon lequel,
dans le cadre de la comparaison de valeur de seuil on vérifie si la longueur du trajet restant entre la position actuelle (S3, S4) et le point d'arrêt suivant prévu (P2, P3) de la trajectoire (1) situé dans la direction de déplacement précédente est inférieure ou égale à la valeur de seuil.

4. Procédé conforme à la revendication 3,
selon lequel,
lorsque la longueur du trajet restant est inférieure ou égale à la valeur de seuil, le véhicule est démarré dans la direction opposée de la direction de déplacement précédente ou le véhicule n'est pas redémarré et le processus de stationnement est achevé.

5. Procédé conforme à l'une des revendications 2 à 4,
selon lequel,
la valeur de seuil a une valeur située dans la plage de 30 centimètres à 5 centimètres, et est en particulier environ égale à 10 centimètres.

6. Procédé conforme à l'une des revendications précédentes,
selon lequel,
le processus de stationnement est un processus d'entrée dans un emplacement de stationnement.

7. Système d'assistance au stationnement comprenant un système de guidage longitudinal et un système de guidage transversal destiné à un véhicule, le système d'assistance au stationnement étant susceptible :
- lors d'un arrêt imprévu pendant un processus de stationnement automatisé, de décider de redémarrer le véhicule dans la direction de déplacement précédente, présente son arrêt en fonction de la longueur du trajet restant entre la position actuelle (S3, S4) et le prochain point d'arrêt prévu (P2, P3) de la trajectoire, situé dans la direction de déplacement précédente, le prochain point d'arrêt de la trajectoire situé dans la direction de déplacement précédente du véhicule étant :
- selon un premier mode de réalisation du système d'assistance au stationnement un point d'inversion (P2) de la trajectoire (1), ou
- en variante selon un second mode de réalisation du système d'assistance au stationnement la positon de fin de stationnement (P3) de la trajectoire (1),
- dans le cas d'une décision positive de provoquer un redémarrage du véhicule dans la direction de déplacement précédente, et
- dans le cas d'une décision négative :
- selon le premier mode de réalisation du système d'assistance au stationnement comprenant un point d'inversion (P2) en tant que prochain point d'arrêt situé dans la direction de déplacement précédente, de provoquer un redémarrage du véhicule dans la direction opposée à la direction de déplacement précédente, ou
- selon le second mode de réalisation du système d'assistance au stationnement comprenant la position de fin de stationnement (P3) en tant que prochain point d'arrêt situé dans la direction de déplacement précédente et aucun point d'inversion (P2) prévu entre la position actuelle (S4) et la position de fin de stationnement (P3) ne pas provoquer un redémarrage du véhicule et d'achever le processus de stationnement.

8. Véhicule comprenant un système d'assistance au stationnement conforme à la revendication 7.
